# EUROPEAN PATENT SPECIFICATION

(11) **EP 0 259 958 B1**
(45) Date of publication and mention of the grant of the patent: **15.09.1993**
(21) Application number: 87306215.2
(22) Date of filing: 14.07.1987
(51) Int. Cl.: G06F 3/023

(54) **Expandable electronic input device**
Erweiterbare elektronische Eingabevorrichtung
Appareil électronique avec possibilité d'extension pour l'entrée de données

(30) Priority: 15.07.1986 JP 166518/86
(43) Date of publication of application: 16.03.1988
(73) Proprietor: BROTHER KOGYO KABUSHIKI KAISHA, Nagoya-shi, Aichi-ken (JP)
(72) Inventor: Fujiwara, Takashi Brother Kogyo Kabushiki Kaisha, Mizuho-ku Nagoya-shi Aichi-ken (JP); Ohara, Kiyotaka Brother Kogyo Kabushiki Kaisha, Mizuho-ku Nagoya-shi Aichi-ken (JP); Kojima, Yasumichi Brother Kogyo Kabushiki Kaisha, Mizuho-ku Nagoya-shi Aichi-ken (JP); Tsuzuki, Toshihiro Brother Kogyo Kabushiki Kaisha, Mizuho-ku Nagoya-shi Aichi-ken (JP)
(74) Representative: Senior, Alan Murray

(56) References cited:
- EP-A- 0 047 078
- EP-A- 0 089 646
- EP-A- 0 137 991
- DE-A- 3 325 409
- GB-A- 2 154 948
- US-A- 4 688 020

## Description

### BACKGROUND OF THE INVENTION

### Field of the Invention

The present invention relates generally to an electronic device which can be modified into a functionally expanded model by addition of optional components, and a method for functionally expanding such an electronic device. More particularly, the invention is concerned with a data input device such as keyboards for personal computers and word processors, and a method for functionally expanding such a data input device, by adding to a standard model optional keys or other operator-controlled components.

### Discussion of the Prior Art

In an electronic device, there arises a need of modifying a standard model to a functionally different model, by adding optional components to standard components provided on the standard model, or by replaciang at least one of the standard components with at least one different component. For example, it becomes necessary to functionally expand data processing equipments such as a personal computer, a word processing device and an electronic typewriter. In this case, it is required to increase the number of data signals that can be entered through the keyboard of the equipment. As a method for attaining this purpose, it is known to increase the number of keys provided on the keyboard. An alternative known method is to increase the number of operation modes of the existing keys, for instance, by concurrently operating two or more keys, or changing the operation time of a key in two or more steps.

While the latter method which does not require the addition of keys is advantageous in terms of a cost for the functional expansion of the equipment, the method requires the operator to perform cumbersome operations on the keyboard. Namely, the keyboard is difficult to operate. On the other hand, the former method of providing a standard keyboard with additional keys does not suffer from a cumbersome operation of the keyboard. However, the addition of keys on the conventional keyboard requires addition of a computer exclusively designed to process the signals generated by the added keys. This addition considerably pushes up the cost required for functional expansion of the keyboard.

The above problems with the keyboard are also encountered in electronic data input devices in general, when these devices are functionally expanded by addition of optional keys or replacement of the existing keys with other keys. Further, similar problems are experienced in the functional expansion of many electronic devices.

It is therefore an object of the invention to provide an electronic device or a data input device such as a keyboard, which can be readily converted or modified at small cost, into a functionally different or expanded model by addition of at least one additional component to a standard model and/or replacement of at least one of standard components of the standard model with at least one different component.

A further object of the invention is to provide a method of adding a group of optional keys to a standard keyboard to obtain a functionally expanded keyboard, with a comparatively simple procedure.

GB 2154948 A shows a modular keyboard assembly where one or more auxiliary printed circuit boards with mounted keys may be added to another printed circuit board with mounted keys for assembly into a keyboard.

According to the present invention, there is provided a data input device having a plurality of standard operator-controlled switches for operating the devices as a standard model, and wherein the standard model may be converted into a functionally different modified model by adding at least one additional operator-controlled switch, said data input device comprising:
a printed circuit board having wirings which are connected to said standard operator-controlled switches and adapted to transfer signals corresponding to said operator-controlled switches;
a program memory for storing at least a standard control program for handling said signals from said wirings connected to said standard operator-controlled switches, so as to enable the data input device to operate as said standard model, said standard control program including a standard scanning routine for scanning said plurality of standard operator-controlled switches to determine whether an operating state of each of said standard operator-controlled switches has been changed or not;
scanning means for scanning at least said standard operator-controlled switches, according to said standard scanning routine characterised by:
program-changing means for changing said standard control program into a modified control program which enables the data input device to operate as said functionally different modified model,
said modified control program including said standard scanning routine, and an optional scanning routine for scanning said at least one additional operator-controlled switch to determine whether an operating state of each of said at least one additional switch has been changed or not.

In the electronic device of the present invention constructed as described above, the standard model can be readily functionally expanded or modified by simply adding an optional component or components with other components. Namely, the functional modification of the standard model into the modified model does not require the addition of a n ew exclusively designed computer, since the program-changing means incorporated in the standard model is adapted to change, upon modification of the standard model, the standard control program into a modified control program which enables the electronic device to operate as functionally modified or expanded model. Accordingly, the functional modification or expansion of the standard model into the modified or expanded model can be effected at a comparatively reduced cost. The program-changing means may comprise means for holding the program memory replacably with an optional program memory for storing the modified control program.

In the data input device constructed as described above, the number of data signals that can be entered can be readily increased simply by adding an optional operator-controlled components to the standard model, without having to use an exclusively designed new computer in addition to the exisiting computer incorporated in the standard model. Yet, the obtained functionally modified or expanded model remains easy to operate.

According to one feature of the above aspect of the invention, the data input device consists of a standard keyboard having a plurality of standard finger-operated keys as the standard operator-controlled components, which is converted into a modified keyboard by adding at least one additional finger-operated key.

In one form of the above feature of the invention, a group consisting of the at least one additional finger-operated key constitutes a group of optional keys, and the standard control program includes a standard-key scanning routine for scanning the standard finger-operated keys, while the modified control program includes an optional-key scanning routine for scanning the group of optional keys, as well as the standard-key scanning routine.

According to one arrangement of the above form of the invention, the program-changing means comprises means for holding the program memory replaceably with a program memory for storing the modified control program.

According to an alternative arrangement of the same form of the invention, the program memory incorporated in the standard keyboard stores a key-scanning program which includes in combination both of the standard control program and the modified control program, and the program-changing means includes signal-generating means which generates a signal whose state is changed before and after the addition of the group of optional keys, the program-changing means changing the standard control program to the modified control program, based on the state of the signal-generating means. In other words, the program memory of the standard model also stores the program for effecting the optinal-key scanning routine for scanning the optional keys which will be provided on the functionally modified or expanded model. Storage of the optional-key scanning routine as well as the standard-key scanning routine in the program memory causes substantially no increase in the cost of the standard model keyboard. Further, the provision of the signal-generating means for generating a signal indicative of the addition of the optional keys will be made at a relatively low cost. The signal-generating means may be a switch whose state is changed upon installation of the group of optional keys in place. Moreover, the optional-key scanning routine will not be executed on the standard model, or until the standard model is modified into the functionally expanded model equipped with the optional keys. Therefore, the scanning of the standard keys on the standard model can be effected without a waste of time for the optional-key scanning routine.

According to a further arrangement of the above form of the invention wherein the modified control program includes both of the standard-key and optional-key scanning routines, the program memory stores the modified control program, that is, the program memory stores a key-scanning program which includes in combination both of the standard-key scanning routine and the optional-key scanning routine. The key-scanning program comprises the steps of: (a) determining whether the optional keys have been installed or not; (b) determining whether a flag has been set or not, if it is determined in the step (a) that the optional keys have been installed; (c) setting the flag if it is determined in the step (b) that the flag has not been set; (d) resetting the flag if it is determined in the step (b) that the flag has been set; (e) scanning the standard finger-operated keys, following the step (c); (f) scanning the optional keys, following the step (d); and (g) if it is determined in the step (a) that the optional keys have not been installed, executing the step (e) while skipping the step (b).

According to a still further arrangement of the same form of the invention, the program-changing means converts the standard control program to the modified control program upon installation of the optional keys, and the modified control program includes a program for handling the signal generated from the wiring of the printed-circuit board connected to at least one of the standard operator-controlled keys, as a signal having a different significance.

According to a yet further arrangement of the same form of the invention, at least a portion of each of the at least one additional finger-operated key is provided in the standard keyboard, and the standard keyboard includes a disabling member for inhibiting the portion of each additional finger-operated key from being operated before the standard keyboard is changed to the modified keyboard, whereby the disabling member renders each additional finger-operated key practically absent on the standard keyboard. The disabling means is removed upon changing of the standard keyboard to the modified keyboard.

According to still another arrangement of the same form of the invention, the standard-key scanning routine and the optional-key scanning routine are effected in different manners. For example, the standard-key scanning routine is effected in an N-key roll-over method, while the optional-key scanning routine is effected in a 2-key roll-over method.

According to a further aspect of the present invention, there is provided a blind key structure which is normally inoperative and is optionally rendered operable as an effective key, comprising: (a) a printed-circuit board having a switch circuit formed thereon; (b) a keystem movable between an operated position in which the switch circuit is closed, and a non-operated position in which the switch circuit is open; (c) support means for supporting the keystem movably between the operated and non-operated positions; and (d) a disabling member detachably disposed on the support means, for inhibiting the keystem from being moved to the operated position. For example, the disabling member is a cover removably attached to the support means, the cover covering the keystem so as to prevent an accessor of an operator to the keystem.

In accordance with a still further aspect of the invention, there is provided a method of adding a group of optional keys to a standard keyboard which has a group of standard keys and which is operated under the control of a computer, comprising the steps of: (a) adding the optional keys on the standard keyboard; and (b) upon addition of the optional keys, changing a control program for the computer, from a standard control program wherein only the standard keys are scanned, to a modified control program wherein not only the standard keys but also the optional keys are scanned.

In accordance with one feature of the above aspect of the invention, the method further comprises a step of providing a program memory which stores a standard-key scanning routine for scanning the standard keys, an optional-key scanning routine for scanning the optional keys, and a step of determining whether the optional keys have been added or not. In this case, the step of changing a control program for the computer comprises a step of executing the standard-key scanning routine while skipping the optional-key scanning routine if the optional keys have not been added, or executing both of the standard-key scanning routine and the optional-key scanning routine if the optional keys have been added.

According to another feature of the same aspect of the invention, the step of changing a control program for the computer comprises replacing a standard program memory which stores only a standard-key scanning routine for scanning the standard keys, with an optional program memory which stores both of the standard-key scanning routine, and an optional-key scanning routine for scanning the optional keys.

### BRIEF DESCRIPTION OF THE DRAWINGS

The above and optional objects, features and advantages of the present invention will be better understood by reading the following detailed description of preferred embodiments of the invention, when considered in connection with the accompanying drawings, in which:
Fig. 1 is a perspective external view of a word processor which may be equipped with optional keys according to one embodiment of the present invention;
Fig. 2 is a schematic block diagram showing a control circuit for the word processor of Fig. 1;
Fig. 3 is an illustration indicating an arrangement of keys on a standard keyboard of the word processor;
Fig. 4 is an illustration showing the added optional keys on a delux keyboard;
Fig. 5 is a fragmentary elevational view of the standard keyboard, showing blind key structures which are utilized to provide the optional keys on the delux keyboard;
Fig. 6 is a flow chart showing a key scanning program stored in a program memory of the word processor of Fig. 1;
Fig. 7 is an illustration showing a standard keyboard according to another embodiment of the present invention;
Fig. 8 is a view explaining functional changes of keys when the standard keyboard of Fig. 7 is modified into a delux keyboard;
Fig. 9 is a view showing an arrangement of printed-circuit boards incorporated in the standard keyboard;
Fig. 10 is a flow chart showing a standard-key scanning routine stored in a standard program memory ROM provided on the standard keyboard;
Fig. 11 is an illustration showing a delux keyboard obtained by modification of the standard keyboard of Fig. 7;
Fig. 12 is a view showing an arrangement of printed-circuit boards incorporated in the delux keyboard; and
Fig. 13 is a flow chart showing a key-scanning routine stored in an optional program memory ROM provided on the delux keyboard.

### DETAILED DESCRIPTION OF THE PREFERRED EMBODIMENTS

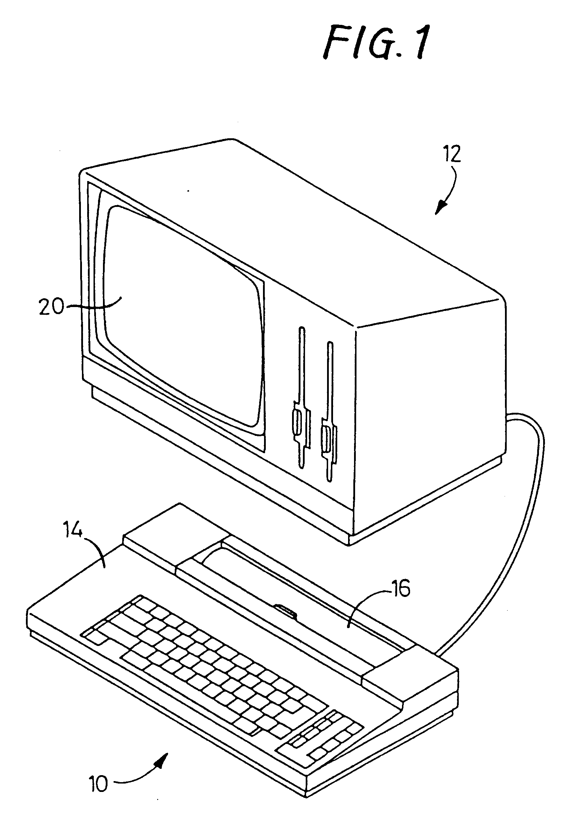

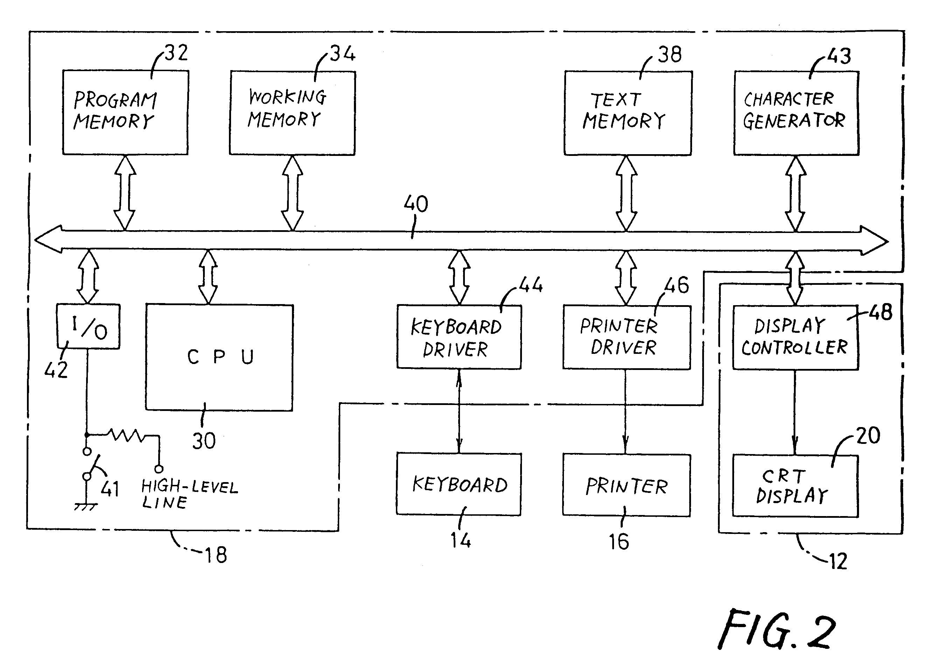

Referring first to Fig. 1, there is shown a word processor which may be equipped with optional keys according the principle of the present invention. This word processor consists of two stand-alone units, i.e., a keyboard-printer unit 10, and a display unit 12. The keyboard-printer unit 10 includes a keyboard 14 and a printer 16. Within a casing of the unit 10, there is incorporated a control circuit 18 as illustrated in Fig. 2. The display unit 12 includes a cathode ray tube (CRT) display 20.

The control circuit 18 is principally constituted by a computer which includes a central processing unit (CPU) 30, a program memory 32, a working memory 34, a text memory 38, and a common data bus 40 which connects these components 30, 32, 34 and 38 to each other. To the common data bus 40, there is connected a switch 41 through an I/O port 42. This switch 41 is incorporated within a casing of the printer 16, and is closed when the optional keys (which will be described in detail) are added. Also connected to the data bus 40 are a character generator 43, a keyboard driver 44, a printer driver 46 and a display controller 48. The keyboard 14 is connected to the keyboard driver 44, so that data entered through each one of the operated keys on the keyboard 14 is applied through the keyboard driver 44 to the working memory 34 and the text memory 38. Based on the text data stored in the text memory 38, the character generator 43 supplies the printer driver 46 and the display controller 48 with character pattern data representative of characters of the text data stored in the text memory 38. The printer driver 46 and display controller 48 have respective memories for storing the received character pattern data, from which the printer 16 and the CRT display 20 are operated to print and display the data entered through the keyboard 14. The CRT display 20 and the display controller 48 are both provided on the display unit 12.

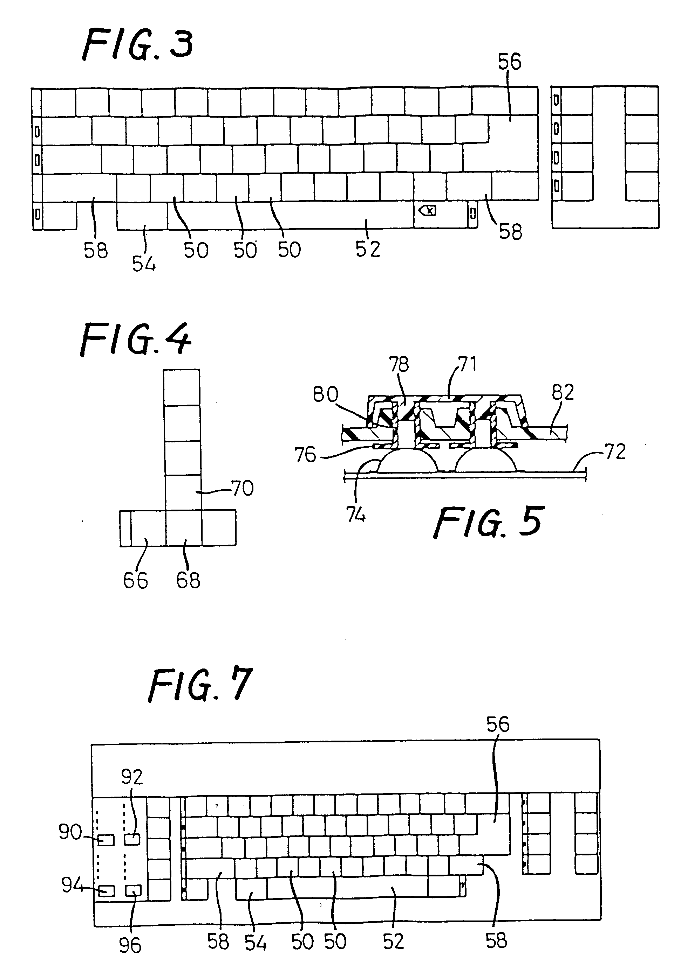

Referring further to Fig. 3, the keyboard 14 has a multiplicity of character keys 50, and a plurality of function keys which consists of two groups. The first group of function keys consists of such function keys that are particularly frequently used. The first group of function keys, which are disposed near the character keys 50, includes a space bar 52, a CODE key 54, a carriage return key 56 and a SHIFT key 58. The second group of function keys is disposed in another section of the keyboard separate from the character keys 50, i.e., in a section at the right-hand side end of the keyboard 14, as indicated in Fig. 3. This second group of function keys consists of two sub-groups. The first sub-group of function keys cooperates with the character keys 50, space bar 52, carriage return key 56, etc. to constitute a group of standard keys. A keyboard having only these standard keys is referred to as a standard model (hereinafter referred to as "standard keyboard 14A"). The function keys of the second sub-group of the second group constitute a group of optional keys, as shown in Fig. 4, which are optionally added to functionally expand the standard keyboard 14A into a modified or expanded model (hereinafter referred to as "delux keyboard 14B"). The optional keys include a START key 66, a STEP STOP key 68, a TEST PAGE key 70, etc.

In the standard keyboard 14A, each optional key is not provided with a keytop and covered by a blind cover or cap 71, as indicated in Fig. 5. Described more specifically, the standard keyboard 14A incorporates a blind key structure, which is not actually necessary for the standard keyboard 14A to serve its function. The blind key structure consists of a stationary contact or contacts formed on a printed-circuit board 72, an elastomeric cup member 74, a movable contact supported by the cup member 74, and a keystem 76 which is supported by an upper casing 82 of the keyboard 14A, such that the keystem 76 is movable between its upper non-operated position, and its lower operated position in which the movable contact is located adjacent to the stationary contact or contacts. The movable and stationary contacts constitute a switching circuit of a key switch. The thus constructed blind key structure is provided on the standard keyboard 14A, so that the standard keyboard 14A may be modified or functionally expanded into the delux keyboard 14B, when necessary. The blind cap 71 has downward bosses 78 extending from its lower surface, while the keystem 76 of each optional key has a through-hole 80. The blind cap 71 is fixed on the upper casing 82 such that the bosses 78 fixedly engage the upper end portions of the through-holes 80 of the optional keys 66, 68, 70. Thus, the blind cap 71 serves as a disabling member for preventing an access of an operator of the keyboard 14A to the keystem 76, for inhibiting the keystem 76 to be moved between its operated and non-operated positions on the standard keyboard 14A.

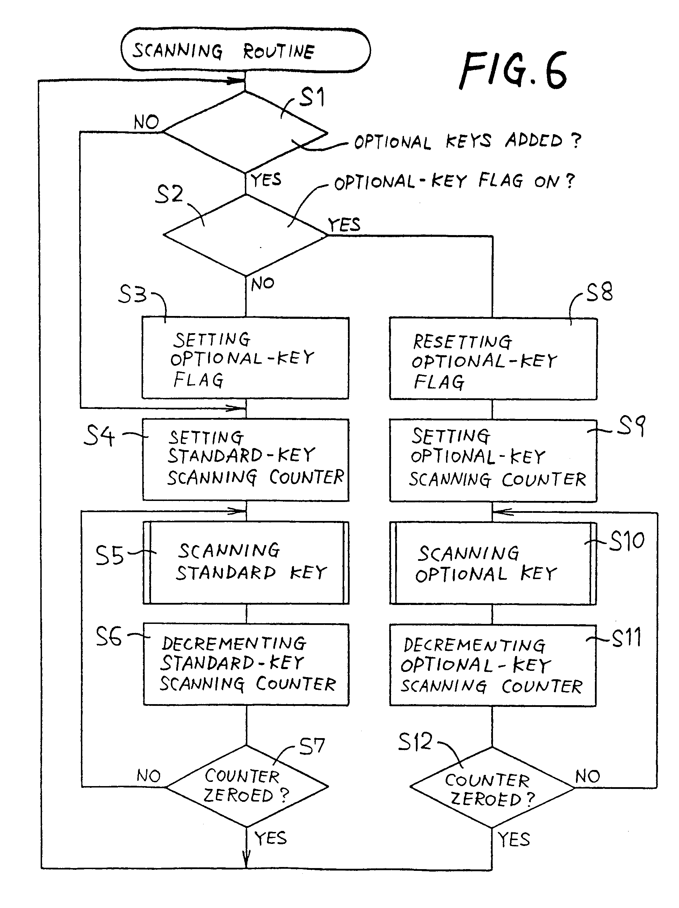

The program memory 32 stores various control programs, which include a key-scanning program as shown in the flow chart of Fig. 6, wherein steps of operations are indicated by numerals following letter S. Initially, step S1 is executed to determine whether the optional keys have been added, or not. Since the switch 41 is open as long as the keyboarad 14 remains the standard keyboard 14A, a negative decision ("NO") is made in step S1. Consequently, the control skips steps S2 and S3 (which will be described) and directly goes to step S4 wherein an initial value equal to the number of the standard keys is set in a standard-key scanning counter provided in the working memory 34. In the next step S6, one of the standard keys which has an identification number equal to the initial value set in the scanning counter is scanned in an N-key roll-over method. Briefly, this scanning method is used for accurately detecting whether any particular key has been activated, even if three or more keys including the particular key to be detected are successively operated in quick finger-actions by the operator, such that the second key is operated before the previously operated first key has been released, and the third key is operated before the second key has been released. The "N" represents the number of the keys which are successively operated. Since this scanning method is well known in the art, no further description of the method will be provided herein.

Then, the control goes to step S6 to decrement the standard-key scanning counter, and to step S7 to check if the scanning counter has been zeroed or not. Since the scanning operation of the standard keys has just been started (since this is the first scanning cycle to scan the first standard key), the decision in step S7 is obviously negative ("NO"), whereby the control returns to step S5 to start the next scanning cycle for the N-key roll-over scanning of the second standard key which corresponds to the current count of the standard-key scanning counter. Then, the control goes to step S6 wherein the scanning counter is further decremented, and to step S7 to check if the counter has been zeroed or not. In the same manner, steps S5-S7 are executed repeatedly until all the standard keys have been scanned. That is, the standard-key scanning operation is terminated when the standard-key scanning counter has been zeroed and an affirmative decision ("YES") is obtained in step S7. At the end of the above scanning operation, the control returns to step S1. Since the decision in step S1 is still negative ("NO"), the control goes to step S4 to set again the standard-key scanning counter to the initial value, and to steps S5-S7. At the end of this second scanning operation of all standard keys, the control again returns to step S1.

If any one of the standard keys is operated during the repeated scanning operations, the code data corresponding to the operated standard key is applied to the working memory 34 and the text memory 38.

It is noted that although the program memory 32 provided on the standard keyboard 14A stores a program for executing steps S2, S3 and S8-S12, these steps will not be executed until the optional keys are added. In other words, only the standard keys are scanned for detecting their operations until the keyboard 14 remains the standard keyboard 14A.

When it becomes necessary to functionally expand the standard keyboard 14A, the blind cap 71 of Fig. 5 is removed, and the keytops of the optional keys indicated in Fig. 4 are attached to the corresponding keystems 76. More specifically, each keytop has a boss similar to the boss 78 of the blind cap 71, and the boss of the keytop is inserted in the upper portion of the through-hole 80 formed in the respective keystem 76. This simple procedure for adding the optional keys is contrary to a cumbersome timing-consuming procedure required to add an optional key on a conventional keyboard. For example, the conventional procedure requires: removing the printed-circuit board 72; removing a blind cap secured to the underside of the upper casing 82; attaching the keystem 76 and the elastomeric cup member 74; securing again the printed-circuit board 72 to the upper casing 82; and fixing a keytop to the keystem 76. Thus, the standard keyboard 14A is expanded to the delux keyboard 14B.

Upon mounting of the keytops on the keystems 76 of the optional keys, the switch 41 as shown in Fig. 2 is closed. As a result, a high-level voltage signal from the switch 41, which has been applied to the CPU 30 via the I/O port 42, is changed to a low-level voltage signal.

This change in the voltage signal is detected by the CPU 30, as a signal indicating the addition of the optional keys. Therefore, an affirmative decision ("YES") is obtained in step S1 of the flow chart of Fig. 6. Consequently, step S1 is followed by step S2 to check if an optional-key flag has been set. Since the optional-key flag has been initially reset, a negative decision ("NO") is obtained in step S2, and the next step S3 is executed to set the optional-key flag. Subsequently, steps S4-S7 are executed to scan the standard keys successively, in the same manner described with respect to the standard keyboard 14A. After all the standard keyboard have been scanned, the control returns to step S1 and then to step S2. At this time, the optional-key flag is set, and an affirmative decision is obtained in step S2, whereby the control goes to step S8 to reset the optional-key flag. Subsequently, step S9 is executed to set an initial value in an optional-key scanning counter in the working memory 34. This initial value is equal to the number of the optional keys which are provided on the delux keyboard 14B.

In the next step S10, one of the optional keys which has an identification number equal to the initial value set in the optional-key scanning counter is scanned in a 2-key roll-over method. Briefly, this scanning method is used for detecting whether any particular key has been activated, even if two keys including the particular key to be detected are successively operated, such that the second key is operated before the previously operated first key has been released. In this scanning method, however, it is impossible to detect the operation of a key if three or more keys are successively operated in the manner indicated above. The 2-key roll-over scanning is simpler than the N-key roll-over method.

Subsequently, the optional-key scanning counter is decremented in step S11, and this step is followed by step S12 to check if the scanning counter has been zeroed or not. Steps S10 and S11 are repeated until an affirmative decision ("YES") is obtained in step S12, namely, until all the optional keys have been scanned. At the end of the first scanning operation, the control returns to step S1 and to step S2. Since the optional-key flag has been reset in step S8, a negative decision is obtained in step S2. Therefore, steps S3-S7 are again executed. Subsequently, the same standard-key and optional-key scanning operations as described above are alternately repeated. If any one of the standard and optional keys is operated, the corresponding code data is applied to the working memory 34 and the text memory 38.

It follows from the above description that the modification of the standard keyboard 14A to the delux keyboard 14B by addition of the optional keys does not require an exclusively designed computer for the newly obtained expanded delux keyboard 14B. Namely, both the standard keys and the optional keys may be scanned with the computer incorporated in the standard keyboard 14A, which computer includes the CPU 30, program memory 32, working memory 34 and common data bus 40.

Further, the optional keys can be scanned in a comparatively short time with a simpler arrangement, since the 2-key roll-over scanning of the optional keys is simpler than the N-key roll-over scanning used for the standard keys. More specifically, the N-key roll-over scanning requires a diode for each of the keys in a key-matrix circuit on the printed-circuit board, in order to prevent possible erroneous detection of a non-operated key due to a signal generated by closure of another key when three or more keys are successively operated. Moreover, the provision of the diodes for the keys causes a voltage drop in the key-matrix circuit, which leads to unstable operation of the circuit. To avoid this inconvenience, a buffer circuit is required. However, the 2-key roll-over scanning method does not require such diodes and buffer circuit, and can therefore be practiced with a comparatively simple arrangement. Accordingly, the cost required for adding the optional keys can be minimized.

While the keystem and other components of each optional key are incorporated in the standard keyboard 14A in the illustrated embodiment, these components may be attached at the time of addition of the optional key. In this case, it is possible to provide a detector circuit which applies a low-level voltage signal to the I/O port 42 when the optional keys are attached to the keyboard 14A. This arrangement eliminates the switch 41 used in the illustrated embodiment.

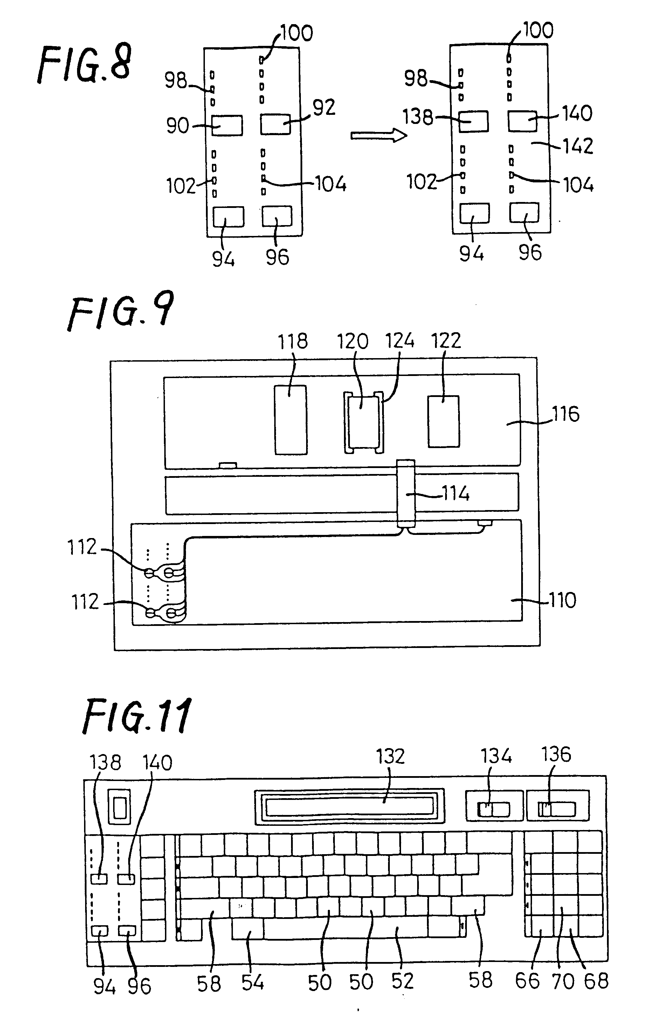

Referring next to Figs. 7 through 11, another embodiment of the present invention will be described.

In this modified embodiment, a change of the key-scanning program necessitated by the addition of the optional keys is effected by replacing a read-only memory (ROM) incorporated in a standard keyboard 14C, with another read-only memory. Described in greater detail, the standard keyboard 14C shown in Fig. 7 has standard keys which consist of keys similar to those provided on the standard keyboard 14A of the preceding embodiment, and a plurality of keys disposed at the left-hand side end section of the keyboard 14C. The keys at the left-hand side end section of the keyboard 14C includes four keys shown in enlargement in Fig. 8, which are: IMPACT key 90; KEYBOARD key 92; LINE key 94; and PITCH key 96. The IMPACT key 90 is used to select an impression force of the printer 16 in three steps: light (L); medium (M); and heavy (H). Adjacent to the IMPACT key 90, there are disposed three light emitting diodes 98 to indicate the selected impression force. The KEYBOARD key 92 is used to select one of three modes I, II and III in which the code data generated by the keyboard 14 is processed differently. The selected keyboard mode is indicated by appropriate one of light emitting diodes 100. The LINE and PITCH keys 94, 96 are used to select desired line spacing and printing pitch of the printer 16. The selected line spacing and pitch are indicated appropriate light emitting diodes 102, 104. Adjacent to these keys and light emitting diodes, there are disposed suitable legends which identify the keys and indicate the meanings of the illuminated diodes.

The standard keyboarad 14C employs a printed-circuit board 110 on which are formed multiple pairs of stationary contacts 112. Fig. 9 shows the stationary contacts 112 for the IMPACT key 90 and the LINE key 94, by way of example. These stationary contacts 112 are connected to a CPU board 116 by a connector 114. In Fig. 9, a plurality of lead wires connecting the stationary contacts 112 and the connector 114 are shown as a single line, in the interest of simplification.

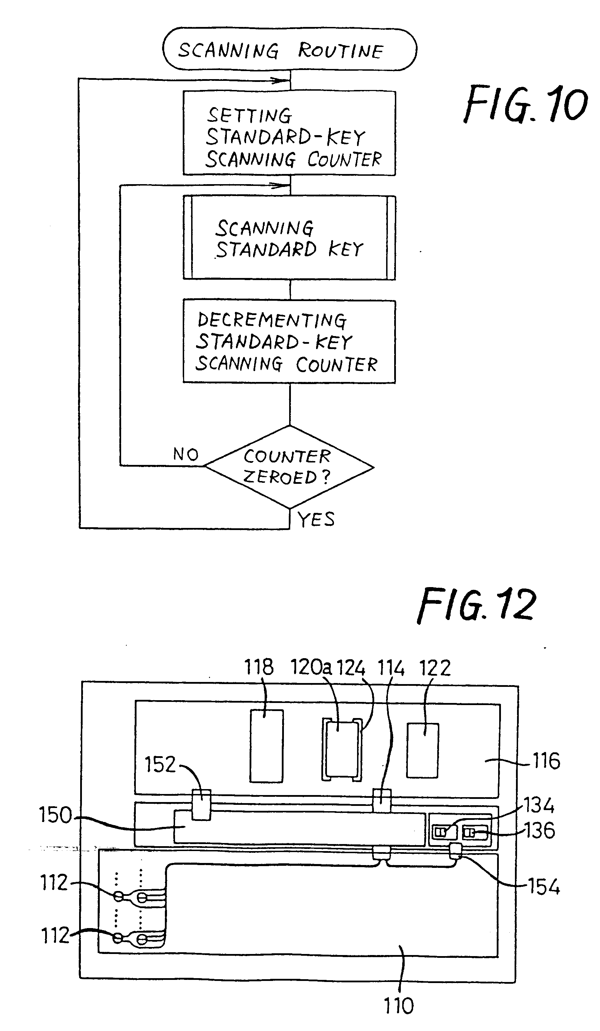

On the CPU board 116, there are mounted three ICs, that is, IC 118 constituting a central processing unit (CPU), IC 120 constituting a program memory (ROM), and IC 122 constituting a working memory (RAM). These ICs 118, 120 and 122 correspond to the CPU 30, program memory 32 and working memory 34 of the preceding embodiment. The ROM IC 120 is connected to the CPU board 116 by means of a connector socket 124, and is replaceable with another ROM IC 120a which will be described. The ROM IC 120 stores control programs similar to those stored in the program memory 32 of Fig. 4. The ROM IC 120 stores a key-scanning program as shown in the flow chart of Fig. 10, which is similar to steps S4-S7 of the standard-key scanning routine of Fig. 6 of the preceding embodiment.

When it becomes necessary to expand the standard keyboard 14C to a delux keyboard 14D, the optional function keys such as the START key 66, STEP STOP key 68, and TEXT PAGE key 70 are added at the right-hand side end section of the standard keyboard 14C, as shown in Fig. 11, in the same manner as described in connection with the preceding embodiment. Further, a liquid crystal display 132, an IMPACT switch 134 and a KEYBOARD switch 136 are provided in an upper part of the keyboard 14C. The IMPACT switch 134 and the KEYBOARD switch 136 have the same functions as the IMPACT key 90 and the KEYBOARD key 92 on the standard keyboard 14C, respectively. On the delux keyboard 14D, the keys which serve as the IMPACT and KEYBOARD keys 90, 92 on the standard keyboard 14C are used as an OPERATE key 138 and a MODE key 140, respectively. Namely, the signals generated from these keys 138, 140 on the delux keyboard 14D are processed or handled as code data signals different from those generated from the IMPACT and KEYBOARD keys 90, 92 provided on the standard keyboard 14C, since the delux keyboard 14D uses an optional ROM IC 120a in place of the standard ROM IC 120 used on the standard keyboard 14C, as described below. Further, an indicator panel 142 is fixedly provided over the left-hand side end section of the standard keyboard 14C (indicated at left in Fig. 8), so that the legends associated with the OPERATE and MODE keys 138, 140 are provided on the delux keyboard 14D. The OPERATE and MODE keys 138, 140 are used to provide a plurality of data processing and printing modes. Since these selector keys 138, 140 are more frequently used than the IMPACT and KEYBOARD keys (IMPACT and KEYBOARD switches 134, 136), the keys 138, 140 are disposed in the left-hand side end section of the delux keyboard 14D, which is more easily accessible than the upper part of the keyboard 14D at which the keys 134, 136 are disposed.

While the above external changes are made to the keyboard 14C, the following internal changes are made to provide the delux keyboard 14D. That is, a printed-circuit board 150 for the liquid crystal display 132 is mounted and connected to the CPU board 116 through a connector 152, and the IMPACT and KEYBOARD switches 134, 136 are connected to a connector 154, as shown in Fig. 12. The connector 154 is provided in the standard keyboard 14C such that the connector 154 is connected to the connector 114. Accordingly, the IMPACT and KEYBOARD switches 134, 136 are connected to the CPU board 116. AS indicated above, the standard ROM IC 120 provided on the CPU board 116 on the standard keyboard 14C is replaced by the optional ROM IC 120a. Thus, the standard keyboard 14C is modified into the delux keyboard 14D.

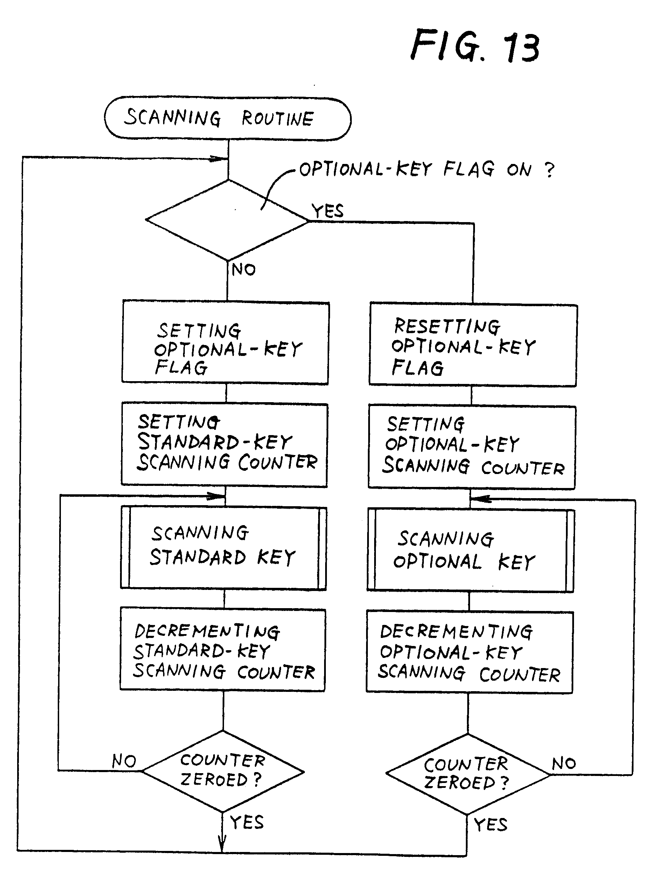

The optional ROM IC 120a on the delux keyboard 14D stores a key-scanning program as illustrated in the flow chart of Fig. 13. This key-scanning program is identical with the key-scanning program of Fig. 6 used in the preceding embodiment, except for the absence of a step for determining whether the optional keys have been added or not. Hence, no further explanation of the program is deemed necessary.

As is apparent from the foregoing description, the optional keys to be provided on the delux keyboard 14D of the present modified embodiment consist of the function keys provided in the right-hand side end section of the keyboard, and the OPERATE and MODE keys 138, 140 which have been used as the IMPACT and KEYBOARD keys 90, 92 on the standard keyboard 14C. With the optional ROM IC 120a substituted for the standard ROM IC 120, the key-scanning program is changed so that not only the standard keys but also the newly provided optional keys are scanned. In the present embodiment, therefore, it is not necessary to use separate signal-generating means (such as the switch 41 used in the preceding embodiment) for generating a signal which indicates that the optional keys have been added.

In the present embodiment, the liquid crystal display 132 which is not provided on the standard keyboard 14C is provided on the delux keyboard 14D, so that text data entered through the keyboard 14D can be edited, without the keyboard-printer unit 10 being connected to the CRT display 20 of the display unit 12. However, it is possible that the standard keyboard 14C has a liquid crystal display having a relatively small digit capacity, while the delux keyboard 14D has a liquid crystal display having a relatively large digit capacity. In this case, it is desirable that the standard keyboard 14C has the necessary wiring for the large-capacity display, so that the substitution of the large-capacity display for the small-capacity display only requires the replacement of the standard ROM IC 120 with the optional ROM IC 120a which includes a control program for the large-capacity display.

In the illustrated two embodiments, the N-key roll-over method is used even for the function keys which belong to the group of standard keys. However, the function keys may be scanned in the 2-key roll-over method, even if those function keys belong to the standard keys.

It is to be understood that the present invention may be embodied with various other changes and improvements which may occur to those skilled in the art.

## Claims

1. A data input device having a plurality of standard operator-controlled switches (50, 52, 54, 56, 58, 90, 92, 94, 96) for operating the devices as a standard model (14A, 14C), and wherein the standard model may be converted into a functionally different modified model (14B, 14D) by adding at least one additional operator-controlled switch (66, 68, 70, 134, 136), said data input device comprising:
a printed circuit board (72, 110) having wirings which are connected to said standard operator-controlled switches and adapted to transfer signals corresponding to said operator-controlled switches;
a program memory (32, 120) for storing at least a standard control program for handling said signals from said wirings connected to said standard operator-controlled switches, so as to enable the data input device to operate as said standard model, said standard control program including a standard scanning routine for scanning said plurality of standard operator-controlled switches to determine whether an operating state of each of said standard operator-controlled switches has been changed or not;
scanning means for scanning at least said standard operator-controlled switches, according to said standard scanning routine characterised by:
program-changing means (30, 41, 124) for changing said standard control program into a modified control program which enables the data input device to operate as said functionally different modified model,
said modified control program including said standard scanning routine, and an optional scanning routine for scanning said at least one additional operator-controlled switch to determine whether an operating state of each of said at least one additional switch has been changed or not.

2. A data input device according to claim 1, wherein said program-changing means comprises means (124) for holding said program memory (120) replaceably with a program memory (120a) for storing said modified control program.

3. A data input device according to claim 1 or 2, wherein said at least one additional operator controlled switch includes at least one selector switch (134, 136).

4. A data input device according to claim 1, 2 o 3 which consists of a standard keyboard (14A, 14C) having a plurality of finger-operated keys (50, 52, 54, 56, 58, 90, 94, 96) as said plurality of standard operator-controlled switches, which is converted into a modified keyboard (14B, 14D) by adding at least one additional finger-operated key (66, 68, 70) as said at least one operator-controlled switch.

5. A data input device according to claim 4, wherein a group consisting of said at least one additional finger-operated key (66, 68, 70) constitutes a group of optional keys, and said standard control program includes a standard-key scanning routine for scanning said standard finger-operated keys (50, 52, 54, 56, 58, 90, 94, 96), while said modified control program includes an optional-key scanning routine for scanning said group of optional keys, as well as said standard-key scanning routine.

6. A data input device according to claim 5 wherein said program memory (32) stores a key-scanning program which includes in combination both of said standard control program and said modified control program, and said program-changing means (30, 41) includes signal-generating means (41) which generates a signal whose state is changed before and after the addition of said group of optional keys, said program-changing means changing said standard control program to said modified control program, based on the state of said signal-generating means.

7. A data input device according to claim 6, wherein said signal-generating means comprises a switch (41) whose state is changed upon installation of said group of optional keys in place.

8. A data input device according to any one of claims 5 to 7 wherein said program memory (32) stores a key-scanning program which includes in combination both of said standard-key scanning routine and said optional-key scanning routine, said key-scanning program comprising the steps of:
(a) determining whether said optional keys (66, 68, 70) have been installed or not;
(b) determining whether a flat has been set or not, if it is determined in said step (a) that the optional keys have been installed;
(c) setting said flag if it is determined in said step (b) that the flag has not been set;
(d) resetting said flag if it is determined in said step (b) that the flag has been set;
(e) scanning said standard finger-operated keys (50, 52, 54, 56, 58, 90, 92, 94, 96), following said step (c);
(f) scanning said optional keys (66, 68, 70), following said step (d); and
(g) if it is determined in said step (a) that said optional keys have not been installed, executing said step (e) while skipping said step (b).

9. A data input device according to any one of claims 5 to 8 wherein said program-changing means (30, 41, 124) converts said standard control program to said modified control program upon installation of said optional keys (66, 68, 70), said modified control program including a program for handling the signal generated from the wiring of said printed-circuit board connected to at least one (90, 92) of said standard operator-controlled keys, as a signal having a different significance.

10. A data input device according to any one of claims 5 to 9 wherein at least a portion (74, 76) of each of said at least one additional finger-operated key (66, 68, 70, 134, 136) is provided in said standard keyboard (14A, 14C), said standard keyboard including a disabling member for inhibiting said portion of said each additional finger-operated key from being operated before said standard keyboard is changed to said modified keyboard, whereby said disabling member renders said each additional finger-operated key practically absent on said standard keyboard, said disabling means being removed upon changing of said standard keyboard to said modified keyboard.

11. A data input device according to any one of claims 5 to 10 wherein said standard-key scanning routine and said optional-key scanning routine are effected in different manners.

12. A data input device according to claim 11, wherein said standard-key scanning routine is effected in an N-key roll-over method, while said optional-key scanning routine is effected in a 2-way roll-over method.

13. A method of adding a group of optional keys (66, 68, 70) to a standard keyboard (14A, 14C) which has a group of standard keys (50, 52, 54, 56, 58, 90, 92, 94, 96) and which is operated under the control of a computer (30, 32, 34, 118, 120, 122), Comprising:
adding said optional keys on said standard keyboard; and characterised by
upon addition of said optional keys, changing a control program for said computer, from a standard control program wherein only said standard keys are scanned, to a modified control program wherein not only said standard keys but also said optional keys are scanned.

14. A method according to claim 13, further comprising a step of providing a program memory (32) which stores a standard-key scanning routine for scanning said standard keys, an optional-key scanning routine for scanning said optional keys, and a step of determining whether said optional keys have been added or not;
said step of changing a control program for said computer comprising a step of executing said standard-key scanning routine while skipping said optional-key scanning routine if said optional keys have not been added, or executing both of said standard-key scanning routine and said optional-key scanning routine if said optional keys have been added.

15. A method according to claim 13, wherein said changing a control program for said computer (118, 120, 122) comprises replacing a standard program memory (120) storing only a standard-key scanning routine for scanning said standard keys, with an optional program memory (120a) storing both of said standard-key scanning routine, and an optional-key scanning routine for scanning said optional keys.

## Patentansprüche

1. Dateneingabevorrichtung, die eine Mehrzahl von Bedienungsperson-gesteuerten Standardschaltern (50, 52, 54, 56, 58, 90, 92, 94, 96) zum Betätigen der Vorrichtungen als ein Standardmodell (14A, 14C) aufweist und bei der das Standardmodell in ein funktionsmäßig anderes modifiziertes Modell (14B, 14D) durch Hinzufügen von mindestens einem zusätzlichen Bedienungsperson-gesteuerten Schalter (66, 68, 70, 134, 136) umgewandelt werden kann, mit:
einer gedruckten Schaltplatte (72, 110) mit Verdrahtungen, die mit den Bedienungsperson-gesteuerten Standardschaltern verbunden sind und zum Übertragen von Signalen, die den Bedienungsperson-gesteuerten Schaltern entsprechen, ausgelegt sind;
einem Programmspeicher (32, 120) zum Speichern von mindestens einem Standardsteuerprogramm zum Handhaben der Signale von den mit den Bedienungsperson-gesteuerten Standardschaltern verbundenen Verdrahtungen, so daß der Dateneingabevorrichtung ermöglicht wird, als das Standardmodell tätig zu sein, wobei das Standardsteuerprogramm eine Standardabtastroutine zum Abtasten der Mehrzahl von Bedienungsperson-gesteuerten Standardschaltern zum Bestimmen, ob sich ein Betriebszustand von jedem der Bedienungsperson-gesteuerten Standardschaltern geändert hat oder nicht, aufweist;
Abtastmittel zum Abtasten von mindestens einem der Bedienungsperson-gesteuerten Standardschalter gemäß der Standardabtastroutine;
gekennzeichnet durch:
Programmänderungsmittel (30, 41, 124) zum Ändern des Standardsteuerprogrammes in ein modifiziertes Steuerprogramm, das der Dateneingabevorrichtung ermöglicht, als das funktionsmäßig andere modifizierte Modell tätig zu sein;
wobei das modifizierte Steuerprogramm die Standardabtastroutine und eine optionale Abtastroutine zum Abtasten des mindestens einen zusätzlichen Bedienungsperson-gesteuerten Schalters zum Bestimmen, ob sich ein Betriebszustand von jedem der mindestens einen zusätzlichen Schalter geändert hat oder nicht, enthält.

2. Dateneingabevorrichtung nach Anspruch 1, bei der das Programmänderungsmittel Mittel (124) zum Halten des Programmspeichers (120) ersetzbar durch einen Programmspeicher (120a) zum Speichern des modifizierten Steuerprogrammes aufweist.

3. Dateneingabevorrichtung nach Anspruch 1 oder 2, bei der der mindestens eine zusätzliche Bedienungsperson-gesteuerte Schalter mindestens einen Auswahltschalter (134, 136) enthält.

4. Dateneingabevorrichtung nach Anspruch 1, 2 oder 3, die aus einer Standardtastatur (14A, 14C) mit einer Mehrzahl von fingerbetätigten Tasten (50, 52, 54, 56, 58, 90, 94, 96) als die Mehrzahl von Bedienungsperson-gesteuerten Standardschaltern besteht, die in eine modifizierte Tastatur (14B, 14D) durch Hinzufügen von mindestens einer zusätzlichen fingerbetätigten Taste (66, 68, 70) als der mindestens eine Bedienungsperson-gesteuerte Schalter umgewandelt wird.

5. Dateneingabevorrichtung nach Anspruch 4, bei der eine Gruppe, die aus der mindestens einen zusätzlichen fingerbetätigten Taste (66, 68, 70) besteht, eine Gruppe von optionalen Tasten darstellt, und das Standardsteuerprogramm eine Standardtastenabtastroutine zum Abtasten der fingerbetätigten Standardtasten (50, 52, 54, 56, 58, 90, 94, 96) enthält, während das modifizierte Steuerprogramm eine Abtastroutine für optionale Tasten zum Abtasten der Gruppe von optionalen Tasten als auch die Standardtastenabtastroutine enthält.

6. Dateneingabevorrichtung nach Anspruch 5, bei der der Programmspeicher (32) ein Tastenabtastprogramm speichert, das als Kombination sowohl das Standardsteuerprogramm als auch das modifizierte Steuerprogramm enthält und das Programmänderungsmittel (30, 41) Signalerzeugungsmittel (41) enthält, das eine Signal erzeugt, dessen Zustand vor und nach dem Hinzufügen der Gruppe von optionalen Tasten geändert wird, wobei das Programmänderungsmittel das Standardsteuerprogramm in das modifizierte Steuerprogramm auf der Basis des Zustandes des Signalerzeugungsmittels ändert.

7. Dateneingabevorrichtung nach Anspruch 6, bei der das Signalerzeugungsmittel einen Schalter (41) aufweist, dessen Zustand durch den Einbau der Gruppe von optionalen Tasten an ihrem Platz geändert wird.

8. Dateneingabevorrichtung nach einem der Ansprüche 5 bis 7, bei der der Programmspeicher (32) ein Tastenabtastprogramm speichert, das als Kombination sowohl die Standardtastenabtastroutine und die Abtastroutine für optionale Tasten enthält, wobei das Tastenabtastprogrmm die Schritte aufweist:
(a) Bestimmen, ob die optionalen Tasten (66, 68, 70) eingebaut sind oder nicht;
(b) Bestimmen, ob eine Marke gesetzt worden ist oder nicht, wenn in dem Schritt (a) bestimmt worden ist, daß die optionalen Tasten eingebaut sind;
(c) Setzen einer Marke, wenn es in dem Schritt (b) bestimmt worden ist, daß die Marke nicht gesetzt ist;
(d) Rücksetzen der Marke, wenn es in dem Schritt (b) bestimmt worden ist, daß die Marke gesetzt ist;
(e) Abtasten der fingerbetätigten Standardtasten (50, 52, 54, 56, 58, 90, 92, 94, 96) auf den Schritt (c) folgend;
(f) Abtasten der optionalen Tasten (66, 68, 70) auf den Schritt (d) folgend; und
(g) wenn es in dem Schritt (a) bestimmt worden ist, daß die optionalen Tasten nicht eingebaut sind, Ausführen des Schrittes (e), während der Schritt (b) überschlagen wird.

9. Dateneingabevorrichtung nach einem der Ansprüche 5 bis 8, bei der das Programmänderungsmittel (30, 41, 124) das Standardsteuerprogramm in das modifizierte Steuerprogramm auf den Einbau der optionalen Tasten (66, 68, 70) hin umwandelt, wobei das modifizierte Steuerprogramm ein Programm zum Handhaben des Signales enthält, das von der Verdrahtung der gedruckten Schaltplatte erzeugt ist, die mit mindestens einem (90, 92) der Bedienungsperson-betätigten Standardtasten verbunden ist, als ein Signal mit einer anderen Bedeutung.

10. Dateneingabevorrichtung nach einem der Ansprüche 5 bis 9, bei der mindestens ein Teil (74, 76) von jedem der mindestens einen zusätzlichen fingerbetätigten Tasten (66, 68, 70, 134, 136) in der Standardtastatur (14A, 14C) vorgesehen ist, wobei die Standardtastatur ein Verhinderungsteil enthält zum Verhindern, daß der Teil von jedem der zusätzlichen fingerbetätigten Tasten betätigt wird, bevor die Standardtastatur in die modifizierte Tastatur geändert ist, wobei das Verhinderungsteil bewirkt, daß jede zusätzliche fingerbetätigte Taste praktisch auf der Standardtastatur abwesend ist, wobei das Verhinderungsmittel auf die Änderung hin der Standardtastatur in die modifizierte Tastatur entfernt wird.

11. Dateneingabevorrichtung nach einem der Ansprüche 5 bis 10, bei der die Standardtastenabtastroutine und die Abtastroutine für optionale Tasten auf verschiedene Weisen ausgeführt werden.

12. Dateneingabevorrichtung nach Anspruch 1, bei der die Standardtastenabtastroutine als ein N-Tasten-Abrollverfahren ausgeführt wird, während die Abtastroutine für optionale Tasten als ein Zwei-Weg-Abrollverfahren ausgeführt wird.

13. Verfahren zum Hinzufügen einer Gruppe von optionalen Tasten (66, 68, 70) zu einer Standardtastatur (14A, 14C), die eine Gruppe von Standardtasten (50, 52, 54, 56, 58, 90, 92, 94, 96) aufweist und die unter der Steuerung eines Computers (30, 32, 34, 118, 120, 122) tätig ist, mit:
Hinzufügen der optionalen Tasten auf der Standardtastatur;
und gekennzeichnet durch
auf das Hinzufügen der optionalen Tasten Änderungen eines Steuerprogrammes für den Computer von einem Standardsteuerprogramm, in dem nur Standardtasten abgetastet werden, zu einem modifizierten Steuerprogramm, in dem nicht nur die Standardtasten sondern auch die optionalen Tasten abgetastet werden.

14. Verfahren nach Anspruch 13, weiter mit einem Schritt des Vorsehens eines Programmspeichers (32), der eine Standardtastenabtastroutine zum Abtasten der Standardtasten, eine Abtastroutine für optionale Tasten zum Abtasten der optionalen Tasten und einen Schritt des Bestimmens, ob die optionalen Tasten hinzugefügt worden sind oder nicht, speichert;
wobei der Schritt des Änderns eines Steuerprogrammes für den Computer einen Schritt des Ausführens der Standardtastenabtastroutine, während die Abtastroutine für optionale Tasten übersprungen wird, wenn die optionalen Tasten nicht hinzugefügt worden sind, oder sowohl des Ausführens der Standardtastenabtastroutine als auch der Abtastroutine für optionale Tasten, wenn die optionalen Tasten hinzugefügt worden sind, aufweist.

15. Verfahren nach Anspruch 13, bei dem die Änderung eines Steuerprogrammes für den Computer (118, 120, 122) Ersetzen eines Standardprogrammspeichers (120), der nur eine Standardtastenabtastroutine zum Abtasten der Standardtasten speichert, durch einen optionalen Programmspeicher (120a), der sowohl die Standardtastenabtastroutine als auch die Abtastroutine für optionale Tasten zum Abtasten der optionalen Tasten speichert, aufweist.

## Revendications

1. Dispositif d'entrée de données comportant plusieurs commutateurs standards commandés par un opérateur (50, 52, 54, 56, 58, 90, 92, 94, 96) pour faire fonctionner le dispositif en tant que modèle standard (14A, 14C), et dans lequel le modèle standard peut être converti en un modèle modifié (14B, 14D) ayant des fonctions différentes en ajoutant au moins un commutateur supplémentaire (66, 68, 70, 134, 136) commandé par un opérateur, ledit dispositif d'entrée de données comportant :
une carte (72, 110) à circuit imprimé ayant des câblages qui sont connectés auxdits commutateurs standards commandés par un opérateur et adaptés pour transférer des signaux correspondants auxdits commutateurs commandés par un opérateur,
une mémoire programme (32, 120) destinée à mémoriser au moins un programme de commande standard pour traiter lesdits signaux provenant desdits câblages connectés auxdits commutateurs standards commandés par un opérateur, de manière à permettre au dispositif d'entrée de données d'agir en tant que dit modèle standard, ledit programme de commande standard comportant une routine de balayage standard pour balayer lesdits plusieurs commutateurs standards commandés par opérateur pour déterminer si un état de fonctionnement de chacun desdits commutateurs standards commandés par opérateur a été changé ou ne l'a pas été,
des moyens de balayage pour balayer au moins lesdits commutateurs standards commandés par opérateur, selon ladite routine de balayage standard, caractérisé en ce qu'il comporte :
des moyens (30, 41, 124) de changement de programme destinés à changer ledit programme de commande standard en un programme de commande modifié qui permet au dispositif d'entrée de données d'agir en tant que dit modèle modifié à fonctions différentes,
ledit programme de commande modifié comportant ladite routine de balayage standard, et une routine de balayage optionnelle pour balayer ledit au moins un commutateur supplémentaire commandé par opérateur pour déterminer si un état de fonctionnement de chacun desdits au moins un commutateur supplémentaire a été changé ou ne l'a pas été.

2. Dispositif d'entrée de données selon la revendication 1, dans lequel lesdits moyens de changement de programme comportent des moyens (124) pour supporter ladite mémoire programme (120) de manière à pouvoir être remplacée par une mémoire programme (120a) destinée à mémoriser ledit programme de commande modifié.

3. Dispositif d'entrée de données selon la revendication 1 ou 2, dans lequel lesdits au moins un commutateurs supplémentaires commandés par opérateur comportent au moins un commutateur formant sélecteur (134, 136).

4. Dispositif d'entrée de données selon la revendication 1, 2, ou 3 qui est constitué d'un clavier standard (14A, 14C) ayant plusieurs touches actionnées par un doigt (50, 52, 56, 58, 90, 94, 96) en tant que dits plusieurs commutateurs standards commandés par opérateur, qui est converti en un clavier modifié (14B, 14D) en ajoutant au moins une touche actionnée par un doigt (66, 68, 70) en tant que dit au moins un commutateur commandé par opérateur.

5. Dispositif d'entrée de données selon la revendication 4, dans lequel un groupe constitué de ladite au moins une touche supplémentaire (66, 68, 70) actionnée par un doigt constitue un groupe de touches optionnelles, et ledit programme de commande standard comporte une routine de balayage des touches standards destinée à balayer lesdites touches standards (50, 52, 54, 56, 58, 90, 94, 96) actionnées par un doigt, tandis que ledit programme de commande modifié comporte une routine de balayage des touches optionnelles destinée à balayer ledit groupe de touches optionnelles, ainsi que ladite routine de balayage des touches standards.

6. Dispositif d'entrée de données selon la revendication 5, dans lequel ladite mémoire programme (32) mémorise un programme de balayage des touches qui comporte en combinaison à la fois ledit programme de commande standard et ledit programme de commande modifié, et lesdits moyens (30, 41) de changement de programme comportent des moyens (41) de création de signal qui engendrent un signal dont l'état est modifié avant et après l'ajout dudit groupe de touches optionnelles, lesdits moyens de changement de programme changeant ledit programme de commande standard en dit programme de commande modifié, sur la base de l'état desdits moyens de création de signal.

7. Dispositif d'entrée de données selon la revendication 6, dans lequel lesdits moyens de création de signal comportent un commutateur (41) dont l'état est modifié lors de l'installation dudit groupe de touches optionnelles.

8. Dispositif d'entrée de données selon l'une quelconque des revendications 5 à 7, dans lequel ladite mémoire programme (32) mémorise un programme de balayage des touches qui comporte en combinaison à la fois de ladite routine de balayage des touches standards et de ladite routine de balayage des touches optionnelles, ledit programme de balayage des touches comportant les étapes consistant à :
(a) déterminer si lesdites touches optionnelles (66, 68, 70) ont été installées ou ne l'ont pas été,
(b) déterminer si un drapeau a été initialisé ou ne l'a pas été, s'il est déterminé à l'étape (a) que les touches optionnelles ont été installées,
(c) initialiser ledit drapeau s'il a été déterminé dans ladite étape (b) que le drapeau n'a pas été initialisé,
(d) ré-initialiser ledit drapeau s'il a été déterminé à l'étape (b) que le drapeau a été initialisé,
(e) balayer lesdites touches standards (50, 52, 54, 56, 58, 90, 92, 94, 96) actionnées par un doigt, après ladite étape (c),
(f) balayer lesdites touches optionnelles (66, 68, 70) après ladite étape (d) et
(g) s'il a été déterminé à ladite étape (a) que lesdites touches optionnelles n'avaient pas été installées, exécuter ladite étape (e) tout en sautant ladite étape (b).

9. Dispositif d'entrée de données selon l'une quelconque des revendications 5 à 8, dans lequel lesdits moyens (30, 41, 124) de changement de programme convertissent ledit programme de commande standard en dit programme de commande modifié lors de l'installation desdites touches optionnelles (66, 68, 70), ledit programme de commande modifié comportant un programme de traitement du signal engendré provenant du câblage de ladite carte à circuit imprimé connectée à au moins une (90, 92) desdites touches standards commandées par opérateur, en tant que signal ayant une signification différente.

10. Dispositif d'entrée de données selon l'une quelconque des revendications 5 à 9, dans lequel au moins une partie (74, 76) de chaque dite au moins une touche supplémentaire actionnée par un doigt (66, 68, 70, 134, 136) est prévue dans ledit clavier standard (14A, 14C), ledit clavier standard comportant un élément d'invalidation destiné à empêcher que ladite partie de dite chaque touche supplémentaire actionnée par un doigt soit actionnée avant que ledit clavier standard ne soit changé en dit clavier modifié, de telle sorte que ledit élément d'invalidation rend inopérante en pratique chaque dite touche supplémentaire actionnée par un doigt située sur ledit clavier standard, lesdits moyens d'invalidation étant enlevés lors du changement dudit clavier standard en dit clavier modifié.

11. Dispositif d'entrée de données selon l'une quelconque des revendications 5 à 10, dans lequel ladite routine de balayage des touches standards et la routine de balayage des touches optionnelles sont effectuées de manière différente.

12. Dispositif d'entrée de données selon la revendication 11, dans lequel ladite routine de balayage des touches standards est effectuée selon un procédé de scrutation de N touches, alors que ladite routine de balayage des touches optionnelles est effectuée selon un procédé de scrutation à deux voies.

13. Procédé consistant à ajouter un groupe de touches optionnelles (66, 68, 70) à un clavier standard (14A, 14C) qui comporte un groupe de touches standards (50, 52, 54, 56, 58, 90, 92, 94, 96) et qui est actionné sous la commande d'un ordinateur (30, 32, 34, 118, 120, 122), consistant à ajouter lesdites touches optionnelles sur ledit clavier standard, et caractérisé en ce que lors de l'ajout desdites touches optionnelles, on change un programme de commande dudit ordinateur, à partir d'un programme de commande standard dans lequel seules lesdites touches standards sont balayées, vers un programme de commande modifié dans lequel non seulement lesdites touches standards mais également lesdites touches optionnelles sont balayées.

14. Procédé selon la revendication 13, comportant en outre une étape consistant à fournir une mémoire programme (32) qui mémorise une routine de balayage de touches standards destinée à balayer lesdites touches standards, une routine de balayage de touches optionnelles destinée à balayer lesdites touches optionnelles, et une étape consistant à déterminer si lesdites touches optionnelles ont été ajoutées ou ne l'ont pas été,
ladite étape de changement de programme de commande dudit ordinateur comportant une étape consistant à exécuter ladite routine de balayage des touches standards tout en sautant ladite routine de balayage des touches optionnelles si lesdites touches optionnelles n'ont pas été ajoutées, ou à exécuter à la fois ladite routine de balayage des touches standards et ladite routine de balayage des touches optionnelles si lesdites touches optionnelles ont été ajoutées.

15. Procédé selon la revendication 13, dans lequel ledit changement de programme de commande dudit ordinateur (118, 120, 122) consiste à remplacer une mémoire programme standard (120) ne mémorisant qu'une routine de balayage des touches standards destinée à balayer lesdites touches standards par une mémoire programme optionnelle (120a) mémorisant à la fois ladite routine de balayage des touches standards et une routine de balayage des touches optionnelles pour balayer lesdites touches optionnelles.
